# EUROPÄISCHE PATENTSCHRIFT

(11) **EP 1 267 629 B1**
(45) Veröffentlichungstag und Bekanntmachung des Hinweises auf die Patenterteilung: **29.09.2004**
(21) Anmeldenummer: 01919434.9
(22) Anmeldetag: 05.04.2001
(51) Int. Cl.: A22C 9/00

(54) **VORRICHTUNG ZUM PLÄTTEN VON FLEISCHSTÜCKEN**
DEVICE FOR FLATTENING PIECES OF MEAT
DISPOSITIF POUR APLATIR DES MORCEAUX DE VIANDE

(30) Priorität: 07.04.2000 DE 10017348
(43) Veröffentlichungstag der Anmeldung: 02.01.2003
(73) Patentinhaber: Völkl, Thomas, 83052 Bruckmühl (DE)
(72) Erfinder: Völkl, Thomas, 83052 Bruckmühl (DE)
(74) Vertreter: Flach, Dieter Dipl.-Phys.
(86) Internationale Anmeldenummer: PCT/EP2001/003911
(87) Internationale Veröffentlichungsnummer: WO 2001/076376

(56) Entgegenhaltungen:
- EP-A- 0 027 301
- FR-A- 2 358 107
- FR-A- 2 491 729
- FR-A- 2 711 483
- FR-A- 2 726 157
- US-A- 3 234 589
- US-A- 4 467 497

## Beschreibung

Die Erfindung betrifft eine Vorrichtung zum Plätten von Fleischstücken nach dem Oberbegriff des Anspruches 1.

Seit jeher ist bekannt, Fleischstücke zu plätten, insbesondere wenn sie als Schnitzel verarbeitet werden sollen. Zum einen wird dieses Plätten mit dem Ziel der Vergrößerung der Fleischstücke bei gleichzeitiger Dickenabnahme durchgeführt.

Zudem wird durch das Plätten das Ziel realisiert, dass das Fleisch mürbe wird. Bekanntermaßen macht Bindegewebe Fleisch zäh. Durch das Plätten wird erreicht, dass die Fibrillen anders angeordnet werden und das Bindegewebe zwischen den Fibrillen reißt.

Es sind bereits Vorrichtungen bekannt geworden, beispielsweise aus der gattungsbildenden US-A 4,467,497, die vergleichbar dem herkömmlichen Klopfen des Fleisches ein Plätten der Fleischstücke möglich machen sollen. Derartige vorgekannte Vorrichtungen umfassen zwei Förderbänder. Diese Förderbänder sind mittels eines Spaltes übereinander angeordnet, der sich in Transportrichtung von einer Einlaufseite kommend zu einer Abgabeseite immer mehr verringert. Dadurch werden die Fleischstücke während des Transportvorganges zunehmend mehr flach gepresst.

Dabei werden die Förderbandflächen entweder durch Platten oder durch Rollen oder durch beides abgestützt. Ferner gibt es auch Plättvorrichtungen, die zudem Vibratoren mit umfassen.

Auch gibt es Verfahren, die nur unter starkem Druck zwei Platten gegeneinander pressen.

Die Förderbänder müssen auf ihrer Oberfläche vergleichsweise stark strukturiert sein, da sie ansonsten das Fleisch nicht in Förderrichtung in den sich zunehmend verjüngenden Abstandsspalt zwischen den beiden Förderbändern, also in Verengungsrichtung, mitnehmen können, sondern ansonsten das Fleisch bei zunehmender Verengung der Förderbänder entgegen der Förderrichtung wegrutschen würde.

Als nachteilig erweist sich jedoch bei derartigen Anlagen, dass das Fleisch zwischen den beiden Förderbändern zwar geklemmt, d.h. im Sinne einer Dickenabnahme gepresst wird. Nicht gut realisierbar ist aber, dass dadurch eine flächenmäßige Vergrößerung des Fleischstückes möglich wird.

Denn zwischen den beiden Bändern ist das Fleisch derart fest eingepresst und baut dabei eine starke Reibung zu den Bändern auf, dass dadurch einer Flächenvergrößerung des Fleischstückes entgegengewirkt wird.

Zudem ist die Bandstruktur bedingtermaßen, wie vorstehend erläutert ist, meist recht grob. Bei feinen Bänder ist der Plätterfolg bei starker Verformung nicht gewährleistet. Zudem ist die erforderliche Gesamtlänge derartiger Maschinen vergleichsweise groß. Schließlich ist auch die Transportgeschwindigkeit verhältnismäßig gering.

Aufgabe der vorliegenden Erfindung ist es von daher, ausgehend von dem erläuterten Stand der Technik eine verbesserte Vorrichtung zum Plätten von Lebensmitteln, insbesondere Fleischscheiben zu schaffen, mit der eine optimale Vergrößerung des Fleischstückes bei gleichzeitiger Dickenabnahme realisierbar ist.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Mittels der erfindungsgemäßen Vorrichtung können beispielsweise sicher und schnell bratfertige Schnitzel mit mürber Zartheit zuverlässig produziert werden. Erfindungsgemäß lässt sich dabei ein hoher Mürbegrad und eine dauerhafte Vergrößerung des Fleischstückes bei gleichzeitiger Vergleichmäßigung der Dicke mit geringem zusätzlichen Arbeitsaufwand in einem Durchlaufverfahren realisieren. Da die Fibrillen nicht durchschnitten werden, bleibt der Saft im Fleisch. Dadurch ergeben sich mit dem erfindungsgemäßen Verfahren deutliche Vorteile gegenüber bekannten Verfahren zum Zartmachen durch Einschneiden der Fleischportionen (Steaken)

Schließlich kann auf stark strukturierte Bänder verzichtet werden, wodurch gewährleistet ist, dass die Fleischoberfläche nicht durch eine starke Wellung zerstört wird.

Erfindungsgemäß wird dies mit einer rotierenden Trommel gewährleistet, die in Umfangsrichtung versetzt liegend Ausrollwalzen oder eine Vielzahl von Klopfrollen aufweist, die bevorzugt parallel zur Drehachse der rotierenden Trommel angeordnet sind.

Dabei kann das Fleisch relativ lose zwischen zwei Bändern hindurch bis zu einer Plättstelle im Bereich der rotierenden Trommel herangeführt werden. Jeweils zwischen den Pressphasen entsteht immer wieder eine Entspannungsphase, in der sich das Fleisch ausdehnen kann.

Eine Flächenvergrößerung wird erfindungsgemäß vor allem auch dadurch mit unterstützt und gefördert, dass jeweils zwei an der Klopftrommel in Umfangsrichtung benachbart angeordneten Klopf- oder Ausrollwalzen mit aufeinander abgestimmten Oberflächenstrukturen versehen sind. Die Klopfrollen weisen nämlich eine Umfangsrillung auf, wobei sich die erhabenen Ringstege von den dazwischen befindlichen Ringnuten, die in Axialrichtung aufeinander folgend angeordnet sind, bei der einen Klopfrolle gegenüber der benachbarten Klopfrolle versetzt zueinander liegen. Mit anderen Worten liegen die erhabenen Ringstege auf der einen Klopfrolle bezogen auf deren Axiallänge genau an jenen Stellen, an denen an der benachbarten Klopfrolle die mit geringerem Durchmesser versehenen Ringnuten ausgebildet sind und umgekehrt. Durch die dadurch sich abwechselnden erhabenen Stellen der Klopfrollen mit den tieferliegenden wird erreicht, dass sich das Fleisch sowohl in Längsrichtung als auch in Querrichtung in optimaler Weise vergrößern kann und damit möglichst gleichmäßig dünner wird.

Eine weitere Verbesserung wird dadurch erzielt, dass beim Einlauf zur Plättstelle der Einlaufwinkel zwischen einer Gegenplatte und dem Krümmungsradius der Klopftrommel dadurch verringert werden kann, dass die Gegenplatte nicht gerade verlaufend mit tangentialem Ende zum Radius der Klopftrommel ausgerichtet ist, sondern mit zur Klopftrommel konkav ausgerichteten Anlagefläche geformt ist. Dadurch ergibt sich eine Kinematik vergleichbar einer ebenen, d.h. geraden und damit tangentialen Anlageplatte, die zur Erzielung gleicher Verhältnisse jedoch erfordern würde, dass die Klopftrommel eine gegenüber der vorliegenden Erfindung deutlich größeren Durchmesser aufweisen müsste, wodurch die gesamte Baugröße der Anlage sehr viel raumgreifender wäre.

Die Erfindung wird nachfolgend anhand eines Ausführungsbeispieles näher erläutert. Dabei zeigen im Einzelnen:
- Figur 1 :: eine frontseitige Ansicht der erfindungsgemäßen Durchlauf-Plättvorrichtung bei geschlossenen Fronttüren;
- Figur 2 :: eine Seitenansicht längs der Pfeildarstellung A in Figur 1;
- Figur 3 :: eine entsprechende Darstellung zu Figur 1 bei geöffneten Fronttüren und geöffneter oberer Abdeckhaube;
- Figur 4 :: eine schematische Seitenansicht zweier benachbart liegender Klopfrollen mit den unterschiedlichen Lage der Riffelungen.

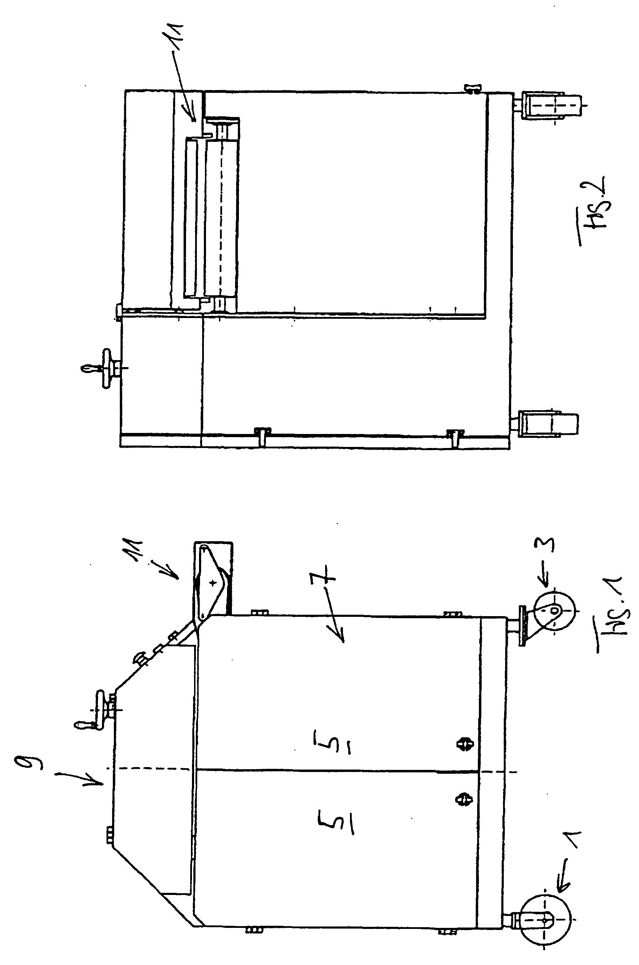

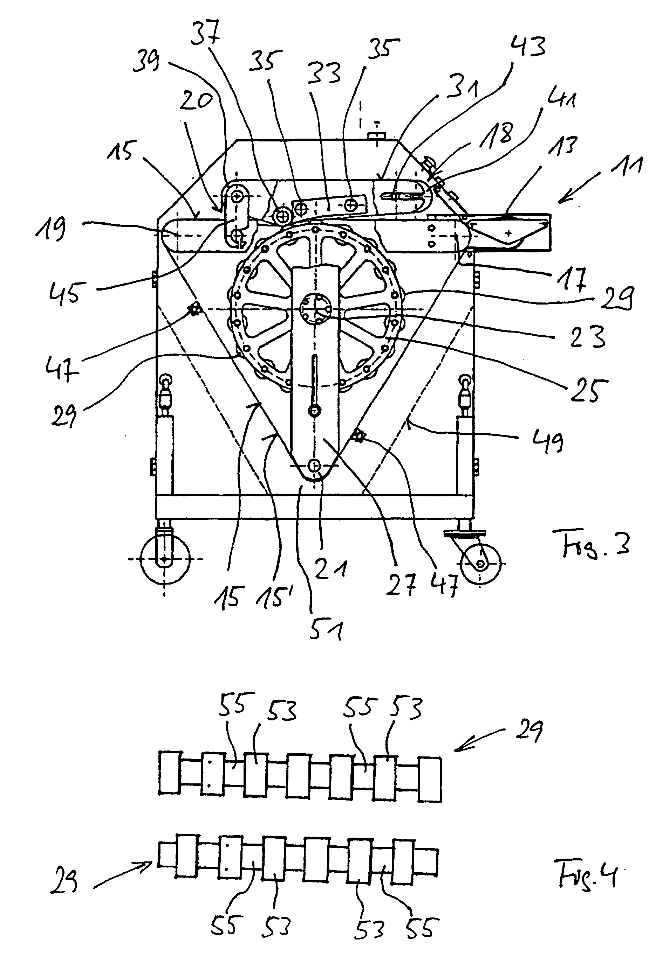

Die anhand der Figuren 1 bis 4 erläuterten Plättvorrichtung zur dauerhaften Vergrößerung von Fleischstücken bei gleichzeitiger Dickenabnahme ist als verfahrbare Einheit mit Fest- und Lenkrädern 1, 3 ausgestattet.

Die Plättvorrichtung umfasst ein im gezeigten Ausführungsbespiel mit zwei frontseitigen Türen 5 versehenes Gehäuse 7 und einer oben liegenden Gehäuseabdeckung 9.

Wie insbesondere in der einen Blick in das Innere freigebenden schematischen Darstellung gemäß Figur 3 ersichtlich ist, umfasst die Plättvorrichtung einen Einlauf 11 mit einem separaten umlaufenden Einlaufband 13.

Als zentrale Fördereinrichtung ist ein Förderband 15 vorgesehen, welches von einer Umlenkstelle 17 (die durch eine in der Zeichnung nicht näher wiedergegebene Umlaufwalze gebildet wird) in zumindest annähernd horizontaler Transportrichtung zu einer abgabenseitigen Umlenkstelle 19 und von dort zu einer unten liegenden Umlenkstelle 21 und darüber wieder zu der eingangsseitigen Umlenkstelle 17 umlaufend geführt ist. Damit ergibt sich in Seitenansicht gemäß Figur 3 eine Förderstrecke für das Förderband 15, welche grob als dreieckförmig bezeichnet werden kann.

Innerhalb dieses Förderbandes 15 ist eine um eine Drehachse 23 rotierende Klopftrommel 25 angeordnet, die über Seitenwangen 27 angeordnet ist.

In Umfangsrichtung versetzt liegend ist an der Klopftrommel 25 eine Vielzahl von Klopfrollen 29 gelagert (die nachfolgend teilweise auch als Ausrollwalzen 29 bezeichnet werden), die gegenüber dem Durchmesser der Klopftrommel 25 einen geringen Durchmesser aufweisen, d.h. einen Durchmesser, der weniger als 25 %, insbesondere weniger als 20 % oder sogar um die 10 % des Durchmesser der Klopftrommel 25 oder noch weniger betragen.

Mit dem Förderband 15 wirkt ein Gegenband 31 zusammen, welches oberhalb des Förderbandes 15 zwischen der Einlaufseite 18 und der Freigabeseite 20 umlaufend angeordnet ist. Dabei läuft das Gegenband 31 an einer oben liegenden Gegenplatte 33 entlang, die bezogen auf die Klopftrommel 25 leicht konkav gestaltet ist. Darüber wird das Gegenband 31 einer konkaven Bahn bezogen auf die Klopftrommel 25 tangential an die Klopftrommel 25 herangeführt. Die Gegenplatte wird dabei über zwei Wellen 35 gehalten und justiert.

In Förderrichtung nachfolgend zur Gegenplatte 33 ist eine mit den Klopfrollen 29 zusammenwirkende Gegenrolle 37 angeordnet.

Im Bereich der Gegenrolle 37 hat das Gegenband bezogen auf die Klopftrommel 25 den tiefsten Punkt erreicht und steigt von dort wieder leicht zu einer ausgangsseitig liegenden Umlenkrolle 39 an, von wo es etwa horizontal zu einer eingangsseitigen Umlenkrolle 41 geführt ist, um von dort wieder in Richtung Gegenplatte 33 zu verlaufen. Im gezeigten Ausführungsbeispiel ist dabei die eingangsseitige Umlenkrolle 41 mittels einer entsprechenden Spann- und Führungseinrichtung 43 axial so verschiebbar, dass das Gegenband 31 immer entsprechend gespannt werden kann.

Das Gegenband ist höhenverstellbar. Dadurch wird die Plättdicke eingestellt. Denkbar ist aber auch, dass die Trommel verstellt wird.

Um das Gegenband 31 leicht auszubauen, zu wechseln und gegebenenfalls auch besser reinigen zu können, ist die eine Stirnseite der ausgangsseitigen Umlenkrolle 39 mit einem verschwenkbaren Arretierhebel 45 abgestützt und gesichert.

Wie schließlich auch noch zu ersehen ist, sind im gezeigten Ausführungsbeispiel in Umlaufrichtung des Förderbandes 15 versetzt liegend noch an zwei Stellen Abstreifer 47 angeordnet, die jeweils mit der Oberseite 15' des Förderbandes 15 wechselwirken, auf der die Fleischstücke zwischen Einlauf- und Abgabeseite aufgelegt werden. Fleischreste können dabei nach unten hin frei abfallen und werden durch eine ebenfalls in Seitenansicht etwa V-förmige Auffangeinrichtung 49 einer unteren Sammelstelle 51 weitergegeben.

Nachfolgend wird auf die Funktionsweise der Plättvorrichtung eingegangen.

Auf das Einlaufband 13 werden im Abstand zueinander die einzelnen zu plättenden Fleischstücke gegeben, die über das Einlaufband 13 in Richtung Förderband 15 weiterbefördert werden.

An der Übergabestelle im Bereich der eingabeseitigen Umlenkstelle 17 wird dabei das zu plättende Fleischstück auf das Förderband 15 übergeben.

Während der weiteren Vorwärtsbewegung setzt dabei das Gegenband 31 von der Oberseite her auf das entsprechende Fleischstück auf, so dass das Fleischstück dann zwischen der Oberseite des Förderbandes 15 und der Unterseite des darüber befindlichen Gegenbandes 31 vorwärts bewegt wird.

Im Bereich der Gegenplatte 33 wird dann das zu plättende Fleischstück leicht zunehmend stärker in Richtung Umfang der Klopftrommel 25 vorwärts bewegt. Während dieser Vorschubbewegung gerät das Fleischstück mit der Vielzahl der Klopfrollen 29 in Wechselwirkung, die von der Unterseite her während der fortlaufenden Rotation der Klopftrommel 25 auf die Unterseite des Förderbandes 15 und darüber auf das zu plättende Fleischstück einwirken, wobei das Fleischstück durch die in diesem Bereich befindliche Gegenplatte 33 nicht nach oben hin ausweichen kann. Die Rotationsbewegung der Klopftrommel 25 sollte dabei mit einer Geschwindigkeit in Vorschubbewegung des Förderbandes oder in gegensinniger Richtung entgegen der Vorschubbewegung des Förderbandes erfolgen, bevorzugt aber mit einer ausreichend hohen Drehgeschwindigkeit, dass die Klopfrollen 29 sich nicht geschwindigkeitsgleich zur Vorschubbewegung des Förderbandes 15 fortbewegen. Mit anderen Worten überstreifen also jedes Fleischstück mehrere Klopfrollen 29, wodurch durch den zunehmend kleineren Abstandsspalt zwischen Klopfrollen und Gegenplatte 33 bzw. den Klopfrollen und der am Ausgang der Gegenplatte 33 sitzenden Gegenrolle 37 das Fleisch zunehmend stärker geplättet und damit in seiner Dicke verringert.

Die gewünschte Flächenvergrößerung des Fleischstückes ist dabei aber dadurch gewährleistet, dass sich stets Pressphasen und Entspannungsphasen während des Plättens abwechseln. Denn die Klopfrollen 29 erzeugen während der Hinwegbewegung über das Fleischstück die kurzen Pressphasen, wobei bis zum Wirksamwerden einer nächsten Klopfrolle durch den Abstand zwischen zwei Klopfrollen 29 die gewünschte Entspannungsphase eintritt, in der die auf das Fleischstück einwirkenden Kräfte dann dazu beitragen, dass das Fleischstück nicht nur in Vorschubrichtung des Förderbandes, sondern auch quer dazu eine Flächenvergrößerung einnehmen kann.

Diese gewünschte Flächenvergrößerung wird noch dadurch unterstützt und verstärkt, dass die Klopfrollen 29 mit einer bestimmten Oberflächenstruktur, wie aus Figur 4 ersichtlich ist, versehen sind.

Die Klopfrollen 29 weisen nämlich eine Vielzahl in Umfangsrichtung verlaufende Ringstege 53 auf, wobei jeweils zwischen zwei in Axialrichtung einer Klopfrolle 29 benachbart sitzenden Ringstege 53 eine tiefer liegende Ringnut 55 ausgebildet ist. Eine dazu benachbarte Klopfrolle 29 ist nunmehr so ausgestattet, dass die dort ausgebildeten Ringstege 53 in Rotations- und Umlaufrichtung der Klopftrommel 25 betrachtet jeweils an den Stellen zu liegen kommen, an denen an einer benachbarten Klopfrolle 29 die Ringnuten liegen und umgekehrt.

Durch diesen Aufbau wird letztlich ein klopfendes Einwirken von linien-, punkt- oder flächenförmigen Teilen der Klopfrollen 29 auf das Förderband und darüber auf das Fleisch realisiert, wodurch ein schneller Wechsel von Verformung und Entspannung ermöglicht wird. Da, wie erwähnt, die Ausrollwalzen 29 abwechselnd mit kleineren und größeren Durchmessern gefertigt sind, ergibt sich dadurch in Axialrichtung der jeweiligen Rolle bzw. Walze 29 versetzt auch ein stetiger Wechsel zwischen Pressstellen und nicht belasteten Stellen.

Durch gegebenenfalls hohe Drehzahlen kann zudem eine starke Verformenergie auch bei großen Transportgeschwindigkeiten erreicht werden.

Durch die erläuterte konkav gewölbte Gegenplatte 33 lässt sich eine gewünschte, fast tangentiale Zulaufbewegung der zu plättenden Fleischstücke bezogen auf den Umfang der Klopftrommel 25 realisieren. Ohne diese konkave Ausgestaltung müsste ansonsten bei tangentialer Zuführung der Fleischstücke zur Plättungsstelle eine Klopftrommel mit gegenüber dem erläuterten Ausführungsbeispiel sehr viel größeren Trommeldurchmesser verwendet werden.

Das gezeigte Ausführungsbeispiel ist für jenen Fall erläutert worden, dass die Klopfrollen, die teilweise auch als Ausrollwalzen 29 bezeichnet werden, auf einer Klopftrommel 25 rotierbar gehalten sind. Als Halte- und Führungskörper können aber auch von der Klopftrommel abweichende Konstruktionen eingesetzt werden. Denkbar ist, dass beispielsweise mittels einer andersartigen umlaufenden Führungseinrichtung die erwähnten Klopfrollen oder Ausrollwalzen 29 vorzugsweise um ihre eigene Achse rotierbar gehalten sind, indem beispielsweise die außen axial überstehende Achsstummel der Klopfrollen 29 in einer umlaufenden Schlittenführung gelagert sind. Die sonstige Wirkungs- und Funktionsweise der Klopfrollen 29 bleibt aber insoweit unverändert. Weitere Abwandlungen sind auch in dieser Hinsicht möglich.

Das Ausführungsbeispiel ist für den Fall erläutert worden, dass die Klopfrollen 29 in oder entgegengesetzt zur Förderbandrichtung auf der Unterseite des Förderbandes in der Plättzone umlaufend fortbewegt werden. Die Klopftrommel könnte aber auch davon abweichend, d.h. winkelig zur Förderband ausgerichtet sein. Möglich wäre sogar, dass die Drehachse der Klopftrommel, also die Klopfrollen in Förderbandrichtung ausgerichtet sind, somit also die Klopfrollen quer zur Förderrichtung des Förderbandes auf der Unterseite des Förderbandes in der Plättzone mit den darüber hinweg bewegten Fleischstücken wechselwirken.

## Patentansprüche

1. Plättvorrichtung zum Plätten von Fleischstücken unter flächenmäßiger Vergrößerung der Fleischstücke bei gleichzeitiger Dickenabnahme, mit folgenden Merkmalen
- es ist eine Fördereinrichtung (15, 31) vorgesehen, worüber die zu plättenden Fleischstücke einer Plättzone zuführbar sind, und
- im Bereich der Plättzonen sind rotierende Rollen oder Walzen (29) vorgesehen, die auf das jeweilige Fleischstück einwirken,
**gekennzeichnet durch** die folgenden weiteren Merkmale
- die Rollen oder Walzen sind in Form von Klopfrollen oder Ausrollwalzen (29) im Bereich der Plättzone gegenüber dem zu plättenden Fleischstück auf dessen Ober- oder Unterseite über dieses hinweg relativ verfahrbar angeordnet.

2. Plättvorrichtung nach Anspruch 1, **dadurch gekennzeichnet,** däss mehrere Klopfrollen oder Ausrollwalzen (29) vorgesehen sind, die längs eines Führungskörpers oder einer Führungsbahn in der Plättzone über das zu plättende Fleischstück hinweg verfahrbar sind.

3. Plättvorrichtung nach Anspruch 1 oder 2, **dadurch gekennzeichnet, dass** die Kiopfrollen (29) auf einer um eine Drehachse (23) rotierenden Klopftrommel (25) in Umfangsrichtung versetzt liegend verankert sind.

4. Plättvorrichtung nach einem der Ansprüche 1 bis 3, **dadurch gekennzeichnet, dass** die Klopfrollen (29) um ihre Achse rotierbar aufgehängt sind.

5. Plättvorrichtung nach einem der Ansprüche 1 bis 4, **dadurch gekennzeichnet, dass** die Klopfrollen (29) unangetrieben sind.

6. Plättvorrichtung nach einem der Ansprüche 1 bis 5, **dadurch gekennzeichnet, dass** die Klopfrollen (29) in der Plättzone auf der Unterseite des Förderbandes (15) hinweg abrollbar sind, auf welchem die zu plättenden Fleischstücke längs bewegbar sind.

7. Plättvorrichtung nach einem der Ansprüche 1 bis 6, **dadurch gekennzeichnet, dass** die Fördereinrichtung für ein zu plättendes Fleischstück ein Förderband (15) und ein im Abstand dazu angeordnetes Gegenband (31) umfasst, zwischen denen sandwichartig das zu plättende Fleischstück fortbewegt wird.

8. Plättvorrichtung nach einem der Ansprüche 1 bis 7, **dadurch gekennzeichnet, dass** das Förderband (15) auf einer Umlaufbahn von einer Einlaufseite (11) über eine Abgabeseite (20) zu einer Einlaufseite (11) umlaufend fortbewegt wird, wobei innerhalb der umlaufenden Bahn die Fördereinrichtung für die fortbewegten Klopfrollen (29) angeordnet ist.

9. Plättvorrichtung nach einem der Ansprüche 1 bis 8, **dadurch gekennzeichnet, dass** das mit dem Förderband (15) zusammenwirkende Gegenband (31) im Bereich der Plättzone mit einer Gegenplatte (33) zusammenwirkt, die auf der zum Förderband (15) gegenüberliegenden rückwärtigen Seite angeordnet ist.

10. Plättvorrichtung nach.Anspruch 9, **dadurch gekennzeichnet, dass** die Gegenplatte (33) bezogen auf die Klopfrollen (29) leicht konkav gestaltet ist.

11. Plättvorrichtung nach Anspruch 3 und nach einem der Ansprüche 7 bis 10, **dadurch gekennzeichnet, dass** der Einlaufwinkel zwischen Förderband (15) und Gegenband (31) durch die Differenz der Krümmungsradien zwischen der konkaven Ausgestaltung der Gegenplatte (33) und dem Radius der Klopftrommel (25) vorbestimmt ist.

12. Plättvorrichtung nach einem der Ansprüche 1 bis 11, **dadurch gekennzeichnet, dass** jeweils benachbarte Klopfrollen (29) mit unterschiedlicher Oberflächenstruktur ausgebildet sind.

13. Plättvorrichtung nach einem der Ansprüche 1 bis 12, **dadurch gekennzeichnet, dass** die Klopfrollen (29) mit Umfangsstegen (53, 55) versehen sind, wobei jeweils zwischen zwei benachbarten Umfangsstegen (53) Umfangsnuten (55) mit geringerem Durchmesser angeordnet sind.

14. Plättvorrichtung nach Anspruch 12 oder 13, **dadurch gekennzeichnet, dass** die Umfangsstege (53) und die Umfangsnuten (55) an zwei benachbarten Klopfrollen (29) so versetzt zueinander liegen, dass jeweils ein Umfangssteg (53) auf der einen Klopfrolle (29) im Bereich der Umfangsnut auf der benachbarten Klopfrolle (29) und umgekehrt zu liegen kommt.

15. Plättvorrichtung nach einem der Ansprüche 3 bis 14, **dadurch gekennzeichnet, dass** die Klopftrommel (25) mit einer Höhenverstelleinrichtung versehen ist.

16. Plättvorrichtung nach einem der Ansprüche 1 bis 15, **dadurch gekennzeichnet, dass** zumindest einer, vorzugsweise mehrere Abstreifer (47) vorgesehen sind, die mit der Oberseite des Förderbandes (15) zusammenwirken.

17. Plättvorrichtung nach einem der Ansprüche 3 bis 16, **dadurch gekennzeichnet, dass** die Drehachse (23) der Klopftrommel (25) quer zur Förderrichtung des Förderbandes (15) ausgerichtet ist.

18. Plättvorrichtung nach einem der Ansprüche 3 bis 17, **dadurch gekennzeichnet, dass** die Drehachse (23) der Klopftrommel (25) parallel zur Transportebene des Förderbandes (15) ausgerichtet ist.

19. Plättvorrichtung nach einem der Ansprüche 3 bis 18, **dadurch gekennzeichnet, dass** die Klopfrollen oder Ausrollwalzen (29) parallel zur Ebene des Förderbandes (15) und/oder der Drehachse (23) der Klopftrommel (25) angeordnet sind.

20. Plättvorrichtung nach einem der Ansprüche 1 bis 16, **dadurch gekennzeichnet, dass** die Klopfrollen (29) abweichend zur Förderrichtung des Förderbandes (15) über die Unterseite des Förderbandes hinweg streichen, vorzugsweise in Querrichtung dazu.

21. Plättvorrichtung nach einem der Ansprüche 1 bis 20, **dadurch gekennzeichnet, dass** der Abstand zwischen den über das zu plättende Fleischstück hinweg bewegbaren Klopfrollen oder Ausrollwalzen (29) und einer Gegendruckeinrichtung oder -fläche (33) während des Plättvorgangs des Fleischstückes verringerbar ist.

## Claims

1. A flattening device for flattening pieces of meat such that their surface is increased and their thickness is simultaneously reduced, with the following characteristics
- a transport device (15, 31) is provided for feeding the pieces of meat to be flattened to a flattening zone, and
- rotating rolls or cylinders (29) that act upon the respective piece of meat are provided in the flattening zones,
**characterized in** the following additional characteristics
- the rolls or cylinders are realized in the form of pounding rolls or roll-out cylinders (29) and arranged in the region of the flattening zone such that they can be displaced relative to the piece of meat to be flattened on its upper side or underside.

2. The flattening device according to Claim 1, **characterized in that** several pounding rolls or roll-out cylinders (29) are provided and can be moved over the piece of meat to be flattened along a guide member or a guideway in the flattening zone.

3. The flattening device according to Claim 1 or 2, **characterized in that** the pounding rolls (29) are anchored on a pounding drum (25) that rotates about an axis of rotation (23) such that they lie offset relative to one another in the circumferential direction.

4. The flattening device according to one of Claims 1-3, **characterized in that** the pounding rolls (29) are suspended such that they are rotatable about their axis.

5. The flattening device according to one of Claims 1-4, **characterized in that** the pounding rolls (29) are not driven.

6. The flattening device according to one of Claims 1-5, **characterized in that** the pounding rolls (29) are able to roll on the underside of the conveyor belt (15), on which the pieces of meat to be flattened are longitudinally transported, in the flattening zone.

7. The flattening device according to one of Claims 1-6, **characterized in that** the transport device for a piece of meat to be flattened consists of a conveyor belt (15) and an opposite belt (31) that is spaced apart from the conveyor belt, wherein the piece of meat to be flattened is transported between said belts in a sandwich-like fashion.

8. The flattening device according to one of Claims 1-7, **characterized in that** the conveyor belt (15) revolves along a path that extends from an inlet side (11) to a delivery side (20) and back to the inlet side (11), wherein the transport device for the pounding rolls (29) is arranged within the revolution path.

9. The flattening device according to one of Claims 1-8, **characterized in that** the opposite belt (31) cooperates with the conveyor belt (15), as well as with a counterplate (33) in the region of the flattening zone, wherein said counterplate is arranged on the rear side that lies opposite of the conveyor belt (15).

10. The flattening device according to Claim 9, **characterized in that** the counterplate (33) is realized in a slightly concave fashion referred to the pounding rolls (29).

11. The flattening device according to Claim 3 and one of Claims 7-10, **characterized in that** the inlet angle between the conveyor belt (15) and the opposite belt (31) is defined by the difference between the curvature radius of the concave design of the counterplate (33) and the radius of the pounding drum (25).

12. The flattening device according to one of Claims 1-11, **characterized in that** respectively adjacent pounding rolls (29) are realized with a different surface structure.

13. The flattening device according to one of Claims 1-12, **characterized in that** the pounding rolls (29) are provided with circumferential webs (53, 55), wherein circumferential grooves (55) with a smaller diameter are respectively arranged between two adjacent circumferential webs (53).

14. The flattening device according to Claim 12 or 13, **characterized in that** the circumferential webs (53) and the circumferential grooves (55) lie offset relative to one another on two adjacent pounding rolls (29) such that a circumferential web (53) on one pounding roll (29) respectively lies in the region of the circumferential groove in the adjacent pounding roll (29) and vice versa.

15. The flattening device according to one of Claims 3-14, **characterized in that** the pounding roll (25) is provided with a height adjusting device.

16. The flattening device according to one of Claims 1-15, **characterized in that** at least one or, in particular, several strippers (47) are provided and cooperate with the upper side of the conveyor belt (15).

17. The flattening device according to one of Claims 3-16, **characterized in that** the axis of rotation (23) of the pounding drum (25) is aligned transverse to the transport direction of the conveyor belt (15).

18. The flattening device according to one of Claims 3-17, **characterized in that** the axis of rotation (23) of the pounding drum (25) is aligned parallel to the transport plane of the conveyor belt (15).

19. The flattening device according to one of Claims 3-18, **characterized in that** the pounding rolls or roll-out cylinders (29) are arranged parallel to the plane of the conveyor belt (15) and/or the axis of rotation (23) of the pounding drum (25).

20. The flattening device according to one of Claims 1-16, **characterized in that** the pounding rolls (29) move over the underside of the conveyor belt in a direction other than the transport direction of the conveyor belt (15), preferably transverse thereto.

21. The flattening device according to one of Claims 1-20, **characterized in that** the distance between the pounding rolls or roll-out cylinders (29) moving over the piece of meat to be flattened and a counterpressure device or a counterpressure surface (33) can be reduced during the flattening of the piece of meat.

## Revendications

1. Dispositif d'aplatissement pour aplatir des pièces de viande, avec un élargissement superficiel des pièces de viande et une diminution simultanée de leur épaisseur, avec les caractéristiques suivantes
- un dispositif de transport (15, 31), par l'intermédiaire duquel les pièces de viande à aplatir peuvent être alimentées vers une zone d'aplatissement est prévu et
- dans la région des zones d'aplatissement, des cylindres ou des rouleaux rotatifs (29) qui agissent sur la pièce de viande respective sont prévus,
**caractérisé par** les caractéristiques supplémentaires suivantes
- les rouleaux ou les cylindres sont disposés sous la forme de cylindres d'aplatissement ou des cylindres de roulage (29) dans la zone d'aplatissement, par rapport à la pièce de viande à aplatir sur sa face supérieure ou inférieure, de façon à pouvoir se déplacer de façon relative par-dessus cette dernière.

2. Dispositif d'aplatissement selon la revendication 1, **caractérisé en ce que** plusieurs cylindres d'aplatissement ou cylindres de roulage (29), qui sont déplaçables le long d'un corps de guidage ou d'un trajet de guidage dans la zone d'aplatissement, au-dessus de la pièce de viande à aplatir sont prévus.

3. Dispositif d'aplatissement selon la revendication 1 ou 2, **caractérisé en ce que** les cylindres d'aplatissement (29) sont ancrés sur un tambour d'aplatissement (25) rotatif autour d'un axe de rotation (23), de façon décalée dans le sens périphérique.

4. Dispositif d'aplatissement selon l'une quelconque des revendications 1 à 3, **caractérisé en ce que** les cylindres d'aplatissement (29) sont accrochés de façon rotative autour de leur axe.

5. Dispositif d'aplatissement selon l'une quelconque des revendications 1 à 4, **caractérisé en ce que** les cylindres d'aplatissement (29) ne sont pas entraînés.

6. Dispositif d'aplatissement selon l'une quelconque des revendications 1 à 5, **caractérisé en ce que** les cylindres d'aplatissement (29) peuvent se dérouler sur la zone d'aplatissement, sur la face inférieure du tapis de transport (15), sur lequel les pièces de viande à aplatir sont déplaçables.

7. Dispositif d'aplatissement selon l'une quelconque des revendications 1 à 6, **caractérisé en ce que** le dispositif de transport d'une pièce de viande à aplatir comprend un tapis de transport (15) et un contre-tapis (31) disposé à distance de ce dernier, entre lesquels la viande à aplatir est déplacée à la manière d'un sandwich.

8. Dispositif d'aplatissement selon l'une quelconque des revendications 1 à 7, **caractérisé en ce que** le tapis de transport (15) est déplacé de façon périphérique sur un trajet de renvoi, d'un côté d'alimentation (11), par l'intermédiaire d'un côté de distribution (20), vers un côté d'alimentation (11), le dispositif de transport pour les cylindres d'aplatissement (29) déplacés étant disposé à l'intérieur du trajet périphérique.

9. Dispositif d'aplatissement selon l'une quelconque des revendications 1 à 8, **caractérisé en ce que** le contre-tapis (31) qui coopère avec le tapis de transport (15) coopère dans la région de la zone d'aplatissement avec une contre-plaque (33) qui est disposée sur la face arrière opposée au tapis de transport (15.

10. Dispositif d'aplatissement selon la revendication 9, **caractérisé en ce que** la contre-plaque (33) est conçue de façon légèrement concave, par rapport aux cylindres d'aplatissement (25).

11. Dispositif d'aplatissement selon la revendication 2 et selon l'une quelconque des revendications 7 à 10, **caractérisé en ce que** l'angle d'alimentation entre le tapis de transport (15) et le contre-tapis (31) est prédéfini par la différence du rayon de courbure entre la conception concave de la contre-plaque (33) et le rayon du tambour d'aplatissement (25).

12. Dispositif d'aplatissement selon l'une quelconque des revendications 1 à 11, **caractérisé en ce que** des cylindres d'aplatissement (29) respectivement voisins sont conçus avec une structure superficielle différente.

13. Dispositif d'aplatissement selon l'une quelconque des revendications 1 à 12, **caractérisé en ce que** les cylindres d'aplatissement (29) sont munis de barrettes périphériques (53, 55), des rainures périphériques (55) de moindre diamètre étant respectivement disposées entre deux barrettes périphériques voisines (53).

14. Dispositif d'aplatissement selon la revendication 12 ou 13, **caractérisé en ce que** les barrettes périphériques (53) et les rainures périphériques (55) sur deux cylindres d'aplatissement (29) sont décalées les unes par rapport aux autres, de façon à ce que respectivement une barrette périphérique (53) sur l'un des cylindres d'aplatissement (29) vienne s'appliquer dans la zone de la rainure périphérique sur le cylindre d'aplatissement voisin (29) et inversement.

15. Dispositif d'aplatissement selon l'une quelconque des revendications 3 à 14, **caractérisé en ce que** le tambour d'aplatissement (25) est muni d'un système de réglage en hauteur.

16. Dispositif d'aplatissement selon l'une quelconque des revendications 1 à 15, **caractérisé en ce qu'**au moins un, de préférence plusieurs racleurs (47) qui coopèrent avec la face supérieure du tapis de transport (15) sont prévus.

17. Dispositif d'aplatissement selon l'une quelconque des revendications 3 à 16, **caractérisé en ce que** l'axe de rotation (23) du tambour d'aplatissement (25) est orienté à la transversale du sens de transport du tapis de transport (15).

18. Dispositif d'aplatissement selon l'une quelconque des revendications 3 à 17, **caractérisé en ce que** l'axe de rotation (23) du tambour d'aplatissement (25) est orienté à la parallèle du plan de transport de la bande de transport (15).

19. Dispositif d'aplatissement selon l'une quelconque des revendications 3 à 18, **caractérisé en ce que** les cylindres d'aplatissement ou les cylindres de roulage (29) sont disposés à la parallèle du plan du tapis de transport (15) et/ ou de l'axe de rotation (23) du tambour d'aplatissement (25)

20. Dispositif d'aplatissement selon l'une quelconque des revendications 1 à 16, **caractérisé en ce que** les cylindres d'aplatissement (29) frôlent la face inférieure du tapis de transport, dans un sens différent du sens de transport du tapis de transport (15), de préférence à la transversale de ce dernier.

21. Dispositif d'aplatissement selon l'une quelconque des revendications 1 à 20, **caractérisé en ce que** la distance entre les cylindres d'aplatissement ou les cylindres de déroulage (29) déplaçables au-dessus des pièces de viande à aplatir et un système ou une surface de contre-pression (33) peut être diminuée au cours du processus d'aplatissement de la pièce de viande.
